# EUROPEAN PATENT APPLICATION

(11) **EP 4 371 957 A1**
(43) Date of publication of application: **22.05.2024**
(21) Application number: 22841544.4
(22) Date of filing: 08.07.2022
(51) Int. Cl.: C04B 22/06, B01J 21/16, B01D 53/62

(54) **MINERAL COMPOSITION WITH ANTIMICROBIAL PROPERTIES FOR CO2 MINERALISATION AND VOLATILE COMPOUND OXIDATION**

(30) Priority: 13.07.2021 ES 202130658
(71) Applicant: Primlab Global S.L., 03759 Benidoleig, Alicante (ES)
(72) Inventor: LLOBREGAT AGUSTI, Juan Carlos, 03759 Alicante (ES); SIVERA MARZA, José Antonio, 03759 Alicante (ES)
(74) Representative: Balder IP Law, S.L.
(86) International application number: PCT/ES2022/070443
(87) International publication number: WO 2023/285717

(57) **Abstract**

The present invention relates to a composition that comprises a mixture of mineral components selected from mineral silicates and igneous rocks, with a particular composition of metal oxides and hydroxides. The invention also relates to a construction product, item or element that comprises said composition, to the use of said construction composition, product, item or element for carbon dioxide mineralisation and/or volatile compound oxidation under ambient temperature and pressure conditions, and to the use of the construction composition, product, item or element to prevent, reduce or eliminate microbial presence and/or activity in a substrate. Additionally, the present invention relates to a method for producing the construction composition, product, item or element, as well as to a method for carbon dioxide mineralisation and/or volatile compound oxidation under ambient temperature and pressure conditions.

## Description

### TECHNICAL SECTOR

The present invention relates to a novel mineral composition that comprises a mixture of mineral components selected from mineral silicates and igneous rocks, with a particular composition of metal oxides and hydroxides. The invention also relates to a construction product, item or element that comprises said composition, to the use of said construction composition, said product, said item or said element for carbon dioxide mineralisation and/or volatile compound oxidation under ambient temperature and pressure conditions, and to the use of the construction composition, product, item or element to prevent, reduce or eliminate microbial presence and/or activity in a substrate. Additionally, the present invention relates to a method for producing the construction composition, product, item or element, as well as to a method for carbon dioxide mineralisation and/or volatile compound oxidation under ambient temperature and pressure conditions.

Therefore, the present invention is included within the technical field of environmental and microbial contamination control and within industrial sectors such as construction, textile, paints, dyes, resins and rubber products, gums, containers.

### BACKGROUND OF THE INVENTION

Global warming, or climate change, is the greatest environmental threat that humanity has faced for years and will continue to face in the coming years, with enormous economic, health and environmental consequences. In addition to accelerating climate change, the world is currently experiencing the emergence of various viruses, such as the new coronavirus that is taking a toll on health and economies around the world.

The lethal effects of high concentrations of carbon dioxide, CO₂, and volatile compounds, such as volatile organic compounds (VOCs), are well known, and the anthropogenic levels of these gases are a concern for all living beings exposed to high levels of CO₂ and volatile compounds.

In searching for the cause of this acceleration of climate change, it has been demonstrated that there is a relationship between the rise in sea levels and high temperatures as a consequence of global warming or climate change and the increase in greenhouse gas emissions, such as carbon dioxide (CO₂), but also volatile compounds such as sulphur oxides (SO₂), formaldehyde (CH₂O), ammonia (NH₃), among others, caused by both developed and developing human societies (due to industrialisation based on fossil fuels and/or other chemical components).

Currently the concentration of CO₂ is greater than 410 ppm (reference can be made to, for example, the data collected by different organisations such as the National Oceanic and Atmospheric Administration of the United States, or NOAA; see, for example, the publications of Dr. Pieter Tans, NOAA/GML (gml.noaa.gov/ccgg/trends/) and Dr. Ralph Keeling, Scripps Institution of Oceanography (scrippsco2.ucsd.edu/). The trend is that its increase and the consequent acceleration of climate change will be exponential if measures are not taken to control it.

Volatile compounds, such as sulphur oxides (SO₂), formaldehydes (CH₂O) or ammonia (NH₃), as well as other volatile organic compounds (VOCs), have harmful effects on human health and on natural ecosystems due to their toxicity, such as carcinogenic effects and other adverse psychological effects. Some of these effects are mainly caused by inhalation: headache, difficulty breathing, dizziness, fatigue, etc. For example, ammonium is one of the main precursor compounds of acid rain, however, other chlorine compounds, ammonia compounds and volatile organic compounds (VOCs), among others, participate in this phenomenon. When present in the atmosphere, these compounds are oxidised to become more reactive forms with water (being hydrolysed), thus producing strong acids, such as nitric acid.

Volatile compounds are chemical compounds which, under ambient temperature conditions, e.g., 10 to 40°C, and ambient pressure conditions, around 1 atmosphere (1 bar or 0.1 MPa), e.g., 0.8 to 1.1 atmospheres (0.8 -1.1 bar or 0.08 - 0.11 MPa), are present in a gaseous state, or which are very volatile under those conditions. For example, volatile compounds can be compounds which, at 20°C, have a vapour pressure of 0.01 kPa or more, or an equivalent volatility under the particular conditions of use. Volatile organic compounds, VOCs, are all those hydrocarbons, i.e., carbon and hydrogen compounds, that meet these conditions.

They usually have a chain with less than twelve carbons and may contain other elements such as oxygen, fluorine, chlorine, bromine, sulphur or nitrogen. There are more than a thousand of them, but the most abundant VOCs in air are methane, toluene, n-butane, i-pentane, ethane, benzene, n-pentane, propane and ethylene. They have both a natural origin (biogenic VOCs) and an anthropogenic origin (due to the evaporation of organic solvents, the burning of fuels, transport, etc.).

The presence of VOCs is fundamentally influenced by activities in which organic solvents are used. Some of the activities where it is possible for VOC emissions to occur are: paints and varnishes (and industries where they are used), the construction industry, the steel industry, the wood industry, the cosmetic industry and the pharmaceutical industry. VOCs affect human health both through the environment and directly. Most of these substances also have a flammable and explosive nature.

Apart from VOCs, many of the pollutants generated by human activities are volatile compounds that are emitted in the form of gases. For example, sulphur is usually emitted in the form of sulphur dioxide (SO₂), while nitrogen is emitted in the form of nitrogen dioxide (NO₂) and/or ammonia (NH₃). However, once they are in the atmosphere, these gases are transformed into particles. This process converts sulphur dioxide into sulphate particles that are no larger than a fraction of a micron. If there is enough ammonia in the air, said sulphate reacts with ammonia to become ammonium sulphate. Fifty years ago, ammonium sulphate was a really dominant component in Europe's air. Nevertheless, sulphur emissions have been greatly reduced throughout Europe, by about 90% since the 1970s. However, although sulphur dioxide emissions have been reduced, ammonia emissions have been reduced much less. This means that ammonia in the atmosphere reacts with other substances. For example, NO₂ in the atmosphere is transformed into nitric acid, and this nitric acid reacts with ammonia to produce ammonium nitrate. Ammonium nitrate is very volatile. In higher areas of the atmosphere, ammonium nitrate is a particle or a droplet, but on a warm day and close to the ground, ammonium nitrate provides nitric acid and ammonia, which are deposited very quickly on the Earth's surface.

As a result, there is a very high demand for the development of new products and methodologies that contribute to the reduction of CO₂ gases and volatile compounds such as sulphur dioxide (SO₂), ammonia (NH₃), and VOCs (such as formaldehyde).

There are currently products on the market, such as photocatalytic paints, that contain titanium dioxide to neutralise NOₓ, as described in patent application PCT/US2008/074876 published as WO2009029854A1. However, the main problems of these products are that photocatalytic paints with titanium dioxide transform NOₓ, generating CO₂ and H₂O as a by-product, and CO₂ levels increase.

Other products that absorb CO₂ are some construction materials as shown in patent application EP2230224A1, which discloses ecological blocks and panels capable of absorbing CO₂. However, these products, the composition of which is based on calcium hydroxide, Ca(OH)₂, or calcium oxide, CaO, to absorb CO₂, have the drawback that they are simply absorbing CO₂ and increasing the weight of the surface where they are applied, whereby they do not eliminate this gas, but rather absorb it and become saturated. The international patent application published as WO 2010006242 A1 discloses methods for producing, from a CO₂ source, carbonate-containing compositions comprising a silicon-based material, such as a pozzolanic material.

Other documents, such as the US patent published as US 9,399,208 B, discloses a catalytic composition that oxidises volatile organic compounds and carbon monoxide to carbon dioxide. The catalytic composition of this document requires an amount of 30% reduced precious metals (e.g., selected from platinum, palladium, rhodium, ruthenium, iridium, and gold). However, the catalytic compositions described, by converting the compounds into CO₂, increases the production thereof. Therefore, there is a need to develop new compositions that can be used in construction products, items or elements and that contribute more effectively to the reduction of CO₂ gases and volatile compounds.

Furthermore, with the increase in microbiological risks such as those experienced with the Covid-19 pandemic, it would likewise be advantageous to provide the same construction products, items or elements with antimicrobial properties to prevent, reduce or eliminate microbial presence and/or activity, e.g., in the human environment.

Some documents describe antimicrobial materials, such as the US patent published as US 9,648,870 B, which describes an antimicrobial material that includes a porous material, a chelating agent and a polyvalent metal ion, where the chelating agent is chemically bonded to the porous material and to the polyvalent metal ion. The Korean patent application published as KR 2017 0007971 A describes an antibacterial coating for paper that includes, in percentages by weight, 1-20% of an antibacterial agent consisting of 50-95% silicate minerals, 1-40% clays and 1-10% metal ion, without specifying the percentages of the different metal oxides and hydroxides that may be present in the composition or their respective roles.

In any event, there is an interest in finding antimicrobial compositions that are easy to produce and easy to integrate into any type of items or materials and which preferably present, at the same time, other advantageous properties such as the reduction of CO₂ and volatile compounds.

### DESCRIPTION OF THE INVENTION

One or more problems of the solutions in the prior art are solved with the composition described in this specification, with the construction products, items or elements that comprise the same, with the uses and/or with the methods also described in this specification.

In particular, a composition has been developed as defined in the claims, which not only mineralises and carbonates CO₂ on the surface without being saturated, but said mineralisation is achieved at ambient temperature (e.g., 10 to 40°C) and even at low temperatures (e.g., - 5 to 5°C) and constantly, both during the day and at night. Consequently, said mineralisation is achieved without the need to apply high temperatures, unlike what happens with other compositions on the market that only work at high temperatures. Furthermore, the compositions described in this specification also oxidise volatile compounds, in turn decomposing and mineralising them. At the same time, a composition as described in this specification has antimicrobial properties.

Without being bound by any theory, the effects of the composition could be explained because the composition incorporates minerals that would act as natural heterogeneous catalysts, which in combination with metal oxides and calcium hydroxide would act as oxidants to reduce the environmental amount of CO₂ and volatile compounds, thus reducing their environmental impact and risks to human health. Furthermore, it is believed that the presence of some metal oxides would provide the composition as defined herein with its antimicrobial properties.

In particular, the present invention relates to a composition comprising
i) 10 to 90% by weight of mineral silicates, selected from tectosilicates and phyllosilicates;
ii) 10 to 90% by weight of a mixture of igneous rocks, of mineral silicates selected from nesosilicates and inosilicates, and
iii) 0 to 20% by weight of hydrated lime,

and wherein the composition comprises
   - a) 5 to 85% by weight of magnesium oxide, MgO;
   - b) 4 to 25% by weight of iron(III) oxide, Fe₂O₃;
   - c) 1 to 20% by weight of calcium hydroxide, Ca(OH)₂;
   - d) 2 to 18% by weight of aluminium oxide, Al₂O₃;
   - e) 8 to 65% by weight of silicon dioxide, SiO₂; and
   - f) 0 to 20% by weight of calcium oxide, CaO;
wherein the percentage by weight is with respect to the weight of the composition; and
wherein the composition has a mean particle size of 50 nm to 2000 µm.

Apart from the mean particle size, the composition is defined on the one hand by its mineral composition, i.e., by the proportion of components i) and ii), and, if present, component iii), and on the other hand by its chemical composition, i.e., by the proportion of metal oxides and hydroxides a)-e) and optionally f).

This is because in addition to determining the chemical composition, the mineral composition provides the composition with a structural component, as detailed below.

Since it has been identified that not only is the proportion of metal oxides and hydroxides a)-e) important to obtain the effects of the invention, but also said structural component also significantly contributes to obtaining same.

In addition, it should be noted that components i) and ii), and, if present, component iii), themselves comprise the metal oxides and hydroxides a)-e) and optionally f), and that, therefore, the nature and exact proportion of components i) and ii), and optionally iii), will determine the composition of metal oxides and calcium hydroxide a)-e) and optionally f). A person skilled in the art will understand that by mixing proportions of i) and ii), and optionally iii), within the specified ranges, a composition of metal oxides and hydroxides a)-e) and optionally f) will also be obtained within the specified ranges.

In particular, as detailed below, a person skilled in the art, e.g., by starting from natural raw materials, can mix a desired proportion of components i) and ii), and optionally iii), to obtain a composition with the specified percentages of metal oxides and hydroxides a)-e) and optionally f). Components i), ii) and iii) are commercially available and of a known chemical composition; therefore, a person skilled in the art starting from said commercial products of a known composition can measure the suitable proportions of the components and mix them to arrive at a composition with a proportion of oxides and hydroxides within those described in this specification.

Furthermore, the percentages of metal oxides and hydroxides a)-e) and optionally f) of the composition (and also of the mineral components i), ii) and optionally iii)) can be determined by methods known to a person skilled in the art, such as, for example, by means of spectrometry and/or atomic absorption.

Mineral silicates are the most abundant group of minerals in the Earth's crust and of the greatest geological importance as they are minerals that form rocks. All silicates are made up of silicon and oxygen and, furthermore, these elements can be accompanied by others, among which aluminium, iron, magnesium or calcium stands out.

The composition described in this specification comprises as component i) 10 to 90% by weight of mineral silicates that are selected from tectosilicates and phyllosilicates.

Tectosilicates are silicate tetrahedra (SiO₄⁻⁴) bonded by their four vertices to other tetrahedra, producing a complex three-dimensional mesh. In turn, the replacement of silicon with aluminium in some tetrahedra allows cations to be placed in the mesh. Tectosilicates can be selected from zeolites (such as, for example, heulandite, particularly Ca-heulandite), feldspars (particularly plagioclases), and feldspathoids.

Phyllosilicates are silicate tetrahedra (SiO₄⁻⁴) bonded by three vertices to other tetrahedra, forming a flat network that extends in a plane of indefinite dimensions. This structure provides a foliated habit to these silicates. The phyllosilicates that comprise the composition of the invention can be selected from clays (particularly selected from sepiolites and chlorites), serpentines, micas (particularly selected from muscovites, biotites and phlogopites).

In a particular embodiment, the tectosilicates are selected from zeolites, feldspars (particularly plagioclases), and feldspathoids; and/or the phyllosilicates are selected from clays (particularly selected from sepiolites and chlorites), serpentines, micas (particularly selected from muscovites, biotites and phlogopites).

In other embodiments, component i) is selected from zeolites and clays, particularly sepiolites, and particularly one is selected from zeolites and clays, particularly sepiolites. Thus, the composition can comprise, e.g., i) 10 to 90% by weight of tectosilicates and/or phyllosilicates selected from zeolites and clays. In particular, the composition may comprise, e.g., i) 10 to 90% by weight of zeolite or clay. In particular embodiments, the clay can be sepiolite. However, it can be preferable for the composition to comprise i) 10 to 90% by weight of zeolite. Zeolite has the advantage that it adsorbs CO₂ gases, and volatile organic compounds, i.e., it retains these gases, thus facilitating their subsequent decomposition and carbonation on the surface of the minerals of the composition.

The tectosilicates and phyllosilicates of component i), given the structure thereof, act by means of an adsorption process whereby atoms, ions or molecules are trapped or retained on the surface thereof, acting as a molecular sieve, and are subsequently released to the surface by means of a physical desorption process. Furthermore, the tectosilicates and phyllosilicates of component i) have naturally acidic properties, and given that, thanks to the particular structure thereof, as explained, they can fix small molecules such as CO₂, volatile compounds on the surface thereof, they are more accessible to the metal oxides and hydroxides of the composition, helping to accelerate the oxidation of volatile compounds, CO₂ mineralisation (carbonation) and in turn the elimination and decomposition thereof at ambient temperature.

Therefore, the tectosilicates and/or phyllosilicates of component i) of the composition act as natural heterogeneous catalysts since they are porous and crystalline materials with a relatively rigid structure formed of negatively charged aluminosilicates; they furthermore stand out for their ability to hydrate and dehydrate in a reversible manner and by ion exchange.

For purposes of this present specification, heterogeneous catalysts are understood as those chemical agents that make the reactions of interest proceed more quickly. It has been observed that they have a high selectivity under ambient temperature conditions, e.g., 10-40°C, and ambient pressure conditions around 1 atmosphere (1 bar or 0.1 MPa). Therefore, the inorganic materials that comprise the composition of the present invention function as natural catalysts, and it has been observed that they facilitate CO₂ mineralisation and volatile component oxidation under ambient temperature conditions, e.g., 10-40°C, and ambient pressure conditions around 1 atmosphere (1 bar or 0.1 MPa), for example, 0.8 to 1.1 atmospheres (0.8 -1.1 bar or 0.08 - 0.11 MPa).

As discussed below, the components of the composition including the tectosilicates and/or phyllosilicates of component i) have a mean particle size of 50 nm to 2000 µm. These particle sizes favour the performance of the tectosilicates and/or phyllosilicates of component i) as heterogeneous catalysts. Therefore, also as detailed below, to achieve these particle sizes, the tectosilicates and/or phyllosilicates have to be selected and optionally micronised.

Tectosilicates and/or phyllosilicates suitable as component i) may typically be natural. Natural components can be extracted, selected and processed directly from the natural environment or can be obtained commercially. Examples of commercial natural tectosilicates and/or phyllosilicates include cristobalite, quartz, orthoclase, albite, tridymite, clays, zeolites, sepiolites, among others.

Compositions described in this specification comprise i) 10 to 90% by weight of mineral silicates, selected from tectosilicates and phyllosilicates, wherein the percentage by weight is with respect to the weight of the composition. Amounts within this range favour the interaction of the substrate (CO₂, volatile compounds and/or microorganisms) with the metal oxides and/or hydroxides of the composition. Amounts less than 10% would have a lower adsorption effect on said interaction and amounts greater than 90% would trap gases better, but since there is a reduced amount of component ii), the elimination and carbonation would be slower. The function of the mineral component i) as catalysts is to trap CO₂ gases and volatile organic compounds, as well as the subsequent adsorption and desorption thereof to avoid obstruction and/or saturation of the composition.

The amount of component i) may preferably be 12 to 80%, particularly 14 to 60%, more particularly 16 to 55%, even more particularly 20 to 50%, and even more particularly 30 to 40%.

The composition of the invention further comprises ii) 10 to 90% by weight of igneous rocks and/or mineral silicates selected from nesosilicates and inosilicates.

In different particular embodiments, component ii) may comprise
- two or more igneous rocks,
- two or more mineral silicates selected from nesosilicates and inosilicates,
- one or more igneous rocks and one or more mineral silicates selected from nesosilicates and inosilicates,
- one or more igneous rocks, one or more mineral silicates selected from nesosilicates and one or more mineral silicates selected from inosilicates.

It can be preferable for component ii) to comprise two or more igneous rocks. In a more particular embodiment, if component ii) comprises two or more igneous rocks, it may further comprise one or more mineral silicates selected from nesosilicates and inosilicates.

When referring to more than one igneous rock or more than one mineral silicate, it is understood that the igneous rocks or mineral silicates are different from one another. For example, igneous rocks different from one another can be a basalt and a peridotite and silicates different from one another can be two different nesosilicates (e.g., a forsterite and a fayalite), two different inosilicates (e.g., a wollastonite and an amphiboloid), or a nesosilicate (e.g., a fosterite) and an inosilicate (e.g., a wollastonite).

Igneous rocks, which are defined as those rocks that have been formed by solidification of magma, in a crystallisation process that results from the cooling of minerals and the interlacing of their particles.

The igneous rocks that can make up component ii) of the composition described in this specification can be selected from basalts, peridotites and gabbros, preferably component ii) may comprise peridotite, and more particularly it may comprise peridotite and basalt.

The mineral silicates that can make up component ii) of the composition described in this specification are selected from nesosilicates and inosilicates.

Nesosilicates, also known as orthosilicates, comprise individual or isolated silicate tetrahedra (SiO₄⁻⁴), which are known as orthosilicate ion, so that each free valency of the tetrahedron is saturated by a cation other than silicon, and large bonding forces are created within the tetrahedron (SiO₄⁻⁴). Examples of nesosilicates that component ii) of the composition may comprise can be selected from: forsterite and fayalite.

The inosilicates that can make up the mixture of component ii) of the composition described in this specification are groups of silicate tetrahedra (SiO₄⁻⁴) bonded in long chains of indefinite length. The most common are those with simple chains, the so-called pyroxenes, while the so-called amphiboles have double chains. This structure gives these minerals a fibrous habit. Examples of inosilicates that component ii) of the composition may comprise can be selected from, for example, wollastonites, amphiboloids, and are preferably selected from wollastonites.

In addition or as an alternative to igneous rocks, the presence of nesosilicates and/or inosilicates provides an absorption effect of CO₂ and volatile compounds, which react with metal oxides and form carbonates, silica and humidity, at cold temperatures as well as at ambient temperature.

The structure of the silicates of component ii) is distinguished from the structure of the silicates of component i) and both contribute to the adsorption and desorption effect of CO₂ gases and volatile compounds, thanks to which it is possible to retain the gases on the surface to allow the chemical modification thereof and expel the products of said modification.

In a particular embodiment of the invention, the igneous rocks are selected from: basalts, peridotites and gabbros; the nesosilicates are selected from forsterite and fayalite; and/or the isosilicates are selected from wollastonites.

Igneous rocks, nesosilicates and/or inosilicates suitable as component ii) are typically natural. Natural components can be extracted, selected and processed directly from the natural environment or can be acquired commercially. Examples of commercial natural products include basalts, gabbros, wollastonites, olivines, forsterite, fayalite, ringwoodite, among others.

Compositions described in this specification comprise ii) 10 to 90% by weight of igneous rocks and/or mineral silicates selected from nesosilicates and inosilicates, wherein the percentage by weight is with respect to the weight of the composition. The amount of component ii) may preferably be 20 to 90%, particularly 30 to 85%, more particularly 40 to 80% and even more particularly 50 to 75%.

As described above, the tectosilicates and/or phyllosilicates of component i) and the igneous rocks, nesosilicates and/or inosilicates of component ii), in addition to providing a structural component to the composition, provide the percentage of required metal oxides and hydroxides a)-e) and optionally f).

In any event, the composition may comprise iii) 0 to 20% by weight of hydrated lime, wherein the percentage by weight is with respect to the weight of the composition.

In the context of the invention, the terms hydrated lime and portlandite are used interchangeably to refer to calcium hydroxide found in the form of colourless crystals and/or white powder, and is formed when quicklime (calcium oxide CaO) is mixed with water. Hydrated lime can also be obtained as a by-product of industrial processes. Hydrated lime or portlandite is also known as lime hydrate, slaked lime, building lime, or chemical lime. For example, the presence of hydrated lime can be necessary or of interest if a composition with a proportion of tectosilicates and/or phyllosilicates i) and a proportion of the mixture ii) of igneous rocks, nesosilicates and/or inosilicates as described did not contain a percentage of 1 to 20% of calcium hydroxide, or if the percentage of calcium hydroxide was to be adjusted within this range.

In particular embodiments, the composition may comprise, preferably, 1 to 18% hydrated lime, more particularly 2 to 15% hydrated lime. In any event, the use of hydrated lime is optional, and in other embodiments the composition may not comprise hydrated lime, i.e., it may have 0% hydrated lime. The function of the chemical component of hydrated lime (calcium hydroxide, Ca(OH)₂) is to help improve carbonation at ambient temperature through this chemical reaction, CO₂ + Ca(OH)₂ → CaCOs + H₂O; furthermore, it does not need heat.

Therefore, in specific embodiments, provided that the percentages of metal oxides and hydroxides a)-e) and optionally f) are also met, as described below, a composition described in this specification may consist of components i) and ii) or components i), ii) and iii).

In a particular embodiment, the composition may comprise, for example, silicates selected from zeolites and clays (particularly sepiolites), and preferably from zeolites as component i), and a mixture of igneous rocks (selected from basalt rocks, peridotites, and gabbro) with isosilicates (selected from wollastonites) as component ii), and hydrated lime as component iii).

In a more particular embodiment, the composition may comprise zeolite or clay, particularly sepiolite, as component i), a mixture of basalt and peridotite as component ii) and hydrated lime as component iii).

In a particular embodiment, the composition may comprise (or consist of) i) 10 to 60% zeolites, ii) 15 to 60% basalt; 5 to 70% peridotite and iii) 2 to 15% hydrated lime. The percentage is by weight with respect to the weight of the composition.

In another particular embodiment, the composition may comprise (or consist of) i) 10 to 60% clay, ii) 15 to 65% basalt, 3 to 80% peridotite; and iii) 1 to 15% hydrated lime. In an even more particular embodiment, the clay is sepiolite. In another even more particular embodiment, the composition may comprise 10 to 60% sepiolite, 15 to 65% basalt, 8 to 80% peridotite, and 1 to 15% hydrated lime. The percentage is by weight with respect to the weight of the composition.

Compositions described in this specification comprise
a) 5 to 85% by weight of magnesium oxide, MgO;
b) 4 to 25% by weight of iron(III) oxide, Fe₂O₃;
c) 1 to 20% by weight of calcium hydroxide, Ca(OH)₂;
d) 2 to 18% by weight of aluminium oxide, Al₂O₃;
e) 8 to 65% by weight of silicon dioxide, SiO₂; and
f) 0 to 20% by weight of calcium oxide;
wherein the percentage by weight is with respect to the weight of the composition.

As described above, the chemical constitution of the composition is defined by the percentages of the metal oxide and hydroxide components a)-e) and optionally f), and said chemical constitution is determined by the mineral components of the composition i)-iii). Metal oxides and hydroxides a)-e) and optionally f), and their percentages, contribute to obtaining the desired effects of the composition, if used in combination with the specified mineral components, which provide a structural element to the composition.

In particular, the beneficial effects are observed with the combination of chemical components a)-e) in the specified proportions as detailed below.

The composition comprises a) 5 to 85% by weight of magnesium oxide, MgO. Magnesium oxide is a chemical component typically found in, for example, peridotite, basalts, gabbro and in nesosilicate and/or inosilicate minerals. In various examples, the percentage of MgO can be 10 to 65%, particularly 15% to 50%, and more particularly 20% to 40%.

MgO can be found accompanied by orthosilicate ions, also known as silicon tetroxide anions, that can help accelerate carbonation along with the catalyst minerals of the formulation at ambient temperature without the need for other energies.

The composition comprises b) 4 to 25% by weight of iron(III) oxide, Fe₂O₃. Iron(III) oxide is a chemical component typically found in igneous rocks and especially in nesosilicate and/or inosilicate minerals. Fe₂O₃ acts similarly to MgO. Furthermore, without being bound by any theory, it is believed that iron(III) oxide, Fe₂O₃ provides an antimicrobial effect along with Al₂O₃. In several examples, the percentage of Fe₂O₃ can be 6% to 18%, particularly 7% to 15%, and more particularly 8% to 12%.

The composition comprises c) 1 to 20% by weight of calcium hydroxide, Ca(OH)₂.

Calcium hydroxide is the chemical component of the hydrated lime/portlandite of component iii) of the composition. Therefore, component iii) can provide the entire amount of calcium hydroxide. However, component iii) may not be present or may contribute only part of the percentage of calcium hydroxide. In the same manner, the mineral components ii) can also contribute part or all of the percentage of calcium hydroxide to the composition. In the event that the mineral components ii) do not provide the indicated percentage of calcium hydroxide, component iii) is added in the form of portlandite/hydrated lime to the composition until reaching a value of 1 to 20% with respect to the total weight of the composition. Component iii) can also be added to adjust the amount of calcium hydroxide within this range, when, for example, component ii) already contributes an amount within the range, but this amount is to be increased, always remaining within range.

The Ca(OH)₂ present in the composition of the invention contributes to CO₂ fixation, helping other oxides present in the composition, such as iron(III) oxide and magnesium oxide, which, as described above, can also be accompanied by orthosilicate ions. Furthermore, calcium hydroxide (Ca(OH)₂) helps carbonation without the presence of heat, i.e., at ambient temperature.

In several examples, the percentage of Ca(OH)₂ can be 2% to 18% by weight, and more particularly 3% to 16%, and even more particularly 4% to 14%.

The composition comprises d) 2 to 18% by weight of aluminium oxide, Al₂O₃. Aluminium oxide is a chemical component typically found in nesosilicates and/or inosilicates. Without being bound by any theory, it is believed that aluminium oxide Al₂O₃ also provides an antimicrobial effect, along with iron oxide and calcium hydroxide. Proportions less than 2% of Al₂O₃ detrimentally affect the calcium hydroxide capabilities of the composition, proportions greater than 18% of Al₂O₃ do not improve their properties, and they are even detrimental to breathing. In several examples, the percentage of Al₂O₃ can be 4% to 16% by weight, and more particularly 6% to 14%. In some embodiments, the percentage of Al₂O₃ can be 10% to 18%, particularly 12% to 16%.

The composition comprises e) 8 to 65% by weight of silicon dioxide, SiO₂. Silicon dioxide is a primary constituent of components i) and ii) of the composition. SiO₂ acts similarly to iron oxide, Fe₂O₃, and magnesium oxide, MgO. Proportions less than 8% SiO₂ detrimentally affect the capabilities of the composition, proportions greater than 65% do not improve its properties, and they are even detrimental. In various examples, the percentage of SiO₂ can be 10 to 55%, and more particularly 15 to 45% and more particularly 18 to 40%.

In various particular embodiments, the composition may comprise (or consist of) a) 10 to 65% by weight of MgO; b) 6% to 18% by weight of Fe₂O₃, c) 2 to 18% by weight of Ca(OH)₂, d) 4 to 16% by weight of Al₂O₃, and e) 10 to 55% by weight of SiO₂.

In various more particular embodiments, the composition may comprise (or consist of) a) 10 to 50% by weight of MgO; b) 7% to 15% by weight of Fe₂O₃, c) 2 to 18% by weight of Ca(OH)₂, d) 4 to 16% by weight of Al₂O₃, and e) 15 to 45% by weight of SiO₂.

The composition of the present invention and CO₂ or volatile compounds react, with several processes taking place at the same time. For example, the following transformations can be identified: formaldehyde (CH₂O) into CO₂ + H₂O, ammonia (NH₃) into nitrogen and water and/or into nitrites and/or nitrates (NO₂⁻/NO3⁻), sulphur dioxide decomposes into sulphite and/or sulphates (SO₃²⁻/SO₄²⁻, e.g., calcium) and environmental CO₂ (or formaldehyde derivative) into carbonates (e.g., MgCOs, CaCOs, FeCO₃, and/or Al₂(CO₃)₃).

Typically, in addition to the oxides and hydroxides a)-e), the composition may contain other components which are, for example, natural constituents of mineral components i)-ii).

For example, in a particular embodiment, the composition of the invention may comprise other metal oxides such as: CaO, TiO₂, Na₂O, K₂O, P₂O₅ and ZnO. These additional metal oxides may each be present in proportions of 0 to 20% by weight, wherein the percentage by weight is with respect to the total weight of the composition. Particularly 1 to 18%, 4 to 16%, and more particularly 5 to 15%. Thus, the composition can comprise, for example, f) 0 to 20% by weight of calcium oxide, CaO and/or 0 to 20 by weight of TiO₂. It can be, for example, preferable for the composition to comprise calcium oxide (CaO). For example, in specific embodiments, the composition may comprise 4 to 20% by weight of calcium oxide (CaO). Calcium oxide can contribute to accelerating carbonation.

For example, in a particular embodiment, the composition may comprise (or consist of) a) 5% to 85% by weight of MgO, b) 4 to 25% by weight of Fe₂O₃, c) 1 to 20% by weight of calcium hydroxide Ca(OH)₂, d) 2 to 18% by weight of aluminium oxide Al₂O₃, e) 8% to 65% by weight of SiO₂, and f) 4 to 20% by weight of calcium oxide CaO, wherein the percentage by weight is with respect to the weight of the composition.

However, it can be preferable for the composition not to comprise these additional oxides (such as K₂O, or TiO₂) or orthosilicates. In particular, it can be preferable for the composition not to comprise titanium oxide (TiO₂), i.e., to be titanium oxide free or have 0% titanium oxide.

Furthermore, for example, if the composition comprises nesosilicates (also called orthosilicates) as part of component ii), the composition may comprise orthosilicate ions (SiO₄⁴⁻), e.g., in the form of salts such as sodium orthosilicate. These orthosilicate salts may be present in proportions of 0 to 30% by weight, wherein the percentage by weight is with respect to the total weight of the composition, particularly 2 to 20%, and more particularly 5 to 15%.

Furthermore, in several embodiments, the composition may consist of chemical components a)-e), and exclude the presence of other components. Thus, in a particular embodiment, the composition of the invention can be characterised in that it consists of a) 5 to 85% by weight of magnesium oxide, MgO; b) 4 to 25% by weight of iron(III) oxide, Fe₂O₃; c) 1 to 20% by weight of calcium hydroxide, Ca(OH)₂; d) 2 to 18% by weight of aluminium oxide, Al₂O₃; and e) 8 to 65% by weight of silicon dioxide, SiO₂, wherein the percentage by weight is with respect to the total weight of the composition and the total of MgO, Fe₂O₃, Ca(OH)₂, Al₂O₃, and SiO₂ add up to 100% with respect to the total weight of the composition. Therefore, according to this particular embodiment, the composition of the invention does not comprise any other oxide such as TiO₂ or CaO, or any other additional component.

Compositions described in this specification have a mean particle size of 50 nm to 2000 µm. Outside this particle size range, the composition does not exert its activity in carbon dioxide mineralisation/carbonation and elimination and volatile component oxidation as efficiently. The particle size also favours the antimicrobial effect of the composition. Particularly, the mean particle size can be 50 nm to 1000 µm, more particularly 75 nm to 500 µm. It can be preferable for the composition to have a mean particle size of 100 nm to 300 µm, particularly 1 µm to 100 µm, and more particularly 5 µm at 50 µm, and even more particularly 10 µm to 30 µm. Without being bound by any theory, it is believed that particle size is important because it offers a greater contact surface with the environment and, in conjunction with component i) of the composition, thus favours the adsorption of the substrates of the reactions of interest, i.e., CO₂, volatile components (CH₂O, NH₃ or SO₂) and/or microorganisms, so that they can react with metal oxides and hydroxides a)-e) and optionally f).

The particle size of the composition can be obtained, for example, by selection of mineral components i), ii) and optionally iii) with a suitable particle size or by micronisation of mineral components i), ii) and optionally iii). The selection of particle sizes can be carried out, e.g., with sieving using laboratory sieves that allow the passage of or retain particles of the desired size, in a manner known to a person skilled in the art. Micronisation is the reduction of the particle size of said mineral components and can be carried out by techniques known to a person skilled in the art. For example, micronisation can be carried out using a commercial microniser, e.g., an MMS micronising mill, a Moritz colloidal mill microniser, etc. Generally, commercial micronisers allow the desired mean particle size to be indicated and the resulting micronised material has said particle size.

The particle size of the composition can also be determined by any particle size characterisation technique known to the person skilled in the art. For example, the particle size of the composition can be determined by the dynamic light scattering (DLS) technique. Another example can be to analyse a sample of the composition with a Mastersizer analysis machine, which uses laser diffraction to measure the particle size and particle size distribution of the sample.

The composition is typically presented in granular form, e.g., as a powder. The composition can be presented in liquid form, e.g., suspended in a solvent for application, for example, on roads; particularly, it can be suspended in resins for, for example, spray application, etc.

The present specification also relates to a product comprising the composition of the invention, wherein the product is selected from a polymeric material, a textile material, a cellulosic material, a construction material and a coating.

In a particular embodiment, the product can be a polymeric material, and more particularly a polymeric material that can be selected, for example, from PS (polystyrene), PP (polypropylene), PVC (polyvinylchloride), LDPE (low density polyethylene), HDPE (high density polyethylene), PET (polyethylene terephthalate), PLA (polylactic acid), polyester, PC (polycarbonate), and rubber (also known as natural gum).

In another particular embodiment, the product can be a coating, and more particularly a coating that is selected from a paint, a varnish, a dye or a resin. Preferably, the coating can be a paint or a varnish. Said coatings can be applied directly to surfaces of different shapes such as walls, floors, any type of road signs, etc., and they can also be applied to all types of substrates for the manufacture of all types of items, as detailed below.

In another particular embodiment, the product can be a textile material, and more particularly the textile material can be selected from woven and nonwoven materials from natural fibres (e.g., selected from cotton, wool) and/or synthetic fibres (e.g., selected from nylon, polyester, and acrylic).

In another particular embodiment, the product can be a cellulosic material, and more particularly the cellulosic material can be selected, for example, from paper, cardboard and wood.

In another particular embodiment, the product can be a construction material, and more particularly the construction material can be selected from mortars, plasters, cements, concrete, bricks, tiles. Preferably, to take full advantage of the properties of the composition described in this specification, the construction material is a material that will be exposed to the environment, i.e., it is preferably a material that is found or applied on the surfaces of construction elements.

In another aspect, the present specification relates to a construction item or element comprising the composition or product described in this specification.

For example, the construction item or element can be made up of the composition or products described above or can be made up of other combined materials (e.g., coated) with the composition or with the products described.

In particular embodiments, the item can be selected from, for example, a filter, a textile item, a wear item and a container. In more particular embodiments, the item can be a filter, particularly the filter can be selected from air filters, purification filters and catalytic filters. In more particular embodiments, a textile item can be selected from masks; clothing, including linens, bedding, sportswear, work clothes, fashion apparel; footwear; and upholstery, such as vehicle seat upholstery. In other more particular embodiments, a wear item can be, for example, a tyre. In other more particular embodiments, a container can be selected from boxes, packaging, bottles, and glasses.

In other particular embodiments, the construction element can be selected from a wall, a pavement, and a road, a floor, a roof, and a facade.

A construction product, item or element as described in this specification may comprise, for example, 0.1 to 25% by weight of the composition with respect to the weight of said construction product, item or element. It has been observed that construction products, items or elements with such percentages of the described composition present the advantageous effects of the composition. Surprisingly, with relatively small amounts of the composition, the beneficial effects can be achieved in construction products, items or elements comprising the same. In particular embodiments, the construction product, item or element may comprise 0.2 to 20%, particularly 0.5 to 15% and more particularly 1 to 10% by weight of the composition with respect to the weight of said construction product, item or element.

The mode of action of the composition of the present invention in the construction products, items or elements described consists of CO₂ carbonation (also referred to as mineralisation), and volatile compound (such as formaldehyde, ammonia or sulphur dioxide) oxidation. In the present description, volatile compound oxidation also refers to the elimination of volatile compounds as a consequence of said oxidation. Advantageously, with the composition described in this specification, these reactions take place under ambient conditions (temperature and pressure). To take full advantage of the properties of the described composition, when it is applied to a construction item or element, itself or as part of one of the products described, the composition is preferably exposed to the environment, i.e., it is preferably located on the surface of said construction items or elements. Thus, when the components of the composition of the invention come into contact with CO₂ and environmental volatile compounds, an adsorption/desorption process occurs in which said gases are chemically trapped, converting them by the action of metal oxides and hydroxides a)-e) and optionally f), transforming them into other products. For example, as described above, CO₂ is transformed into carbonate (CO₃²⁻) and more particularly into its salts (such as calcium carbonate, CaCOs; magnesium carbonate, MgCOs; aluminium carbonate, Al₂(CO₃)₃, and/or iron carbonate, FeCOs), formaldehyde is transformed into in H₂O and CO₂, and in turn, CO₂ is transformed into carbonate, e.g., calcium carbonate, ammonia is transformed into nitrite (NO₂⁻) which in turn can be transformed into nitrate (NO₃⁻) and into its salts and/or into N₂ and H₂O. These transformations can be verified by methods known to a person skilled in the art, for example, by thermogravimetric (TG) analysis.

Due to the properties of metal oxides and hydroxides a)-e) and optionally f), not only are gases transformed, but the resulting products are captured and eliminated. Consequently, the environmental quantities of said harmful starting gases are reduced, thus reducing the increase in the greenhouse effect and its consequences on health. Thus, CO₂ conversion products and volatile compounds become trapped on the surface of the construction item or element, but are subsequently dispersed into the ground through, for example, friction due to the use of the items or due to the action of rainwater or other environmental elements (wind, snowfall, etc.) on the construction elements, wherein these reaction products are not only not harmful to health, but they can also be beneficial for the environment, such as, for example, nitrites and nitrates.

In another aspect, the present specification relates to a method for producing the described composition.

As discussed above, a composition with a particle size within the defined range can be obtained, for example, by selection of mineral components i), ii) and optionally iii) with a suitable particle size or by micronisation of mineral components i), ii) and optionally iii).

The composition can be produced by mixing mineral components i), ii) and optionally iii) before and/or after obtaining a suitable mean particle size by selection or micronisation.

The selection of particle sizes can be carried out, e.g., with sieving using laboratory sieves that allow the passage of or retain particles of the desired size, in a manner known to a person skilled in the art.

Micronisation can be carried out by techniques known to a person skilled in the art. For example, micronisation can be carried out using a commercial microniser, e.g., an MMS micronising mill, a Moritz colloidal mill microniser, etc. Generally, commercial micronisers allow the desired mean particle size to be indicated and the resulting micronised material has said particle size.

In a particular embodiment, the method for producing the described composition may comprise:
a) mixing 10 to 90% by weight of i) mineral silicates selected from tectosilicates and phyllosilicates with 10 to 90% by weight of ii) igneous rocks and/or mineral silicates, selected from nesosilicates and inosilicates, and 0 to 20% by weight of iii) hydrated lime, the percentage by weight being with respect to the weight of the composition; and
b) micronising the mineral silicates and/or the igneous rocks and, optionally, hydrated lime before and/or after step (a), to obtain a composition with a mean particle size of 50 nm to 2000 µm.

The composition produced comprises the metal oxides and hydroxides a)-e) and optionally f) in the percentages defined above.

In step a) of the method for producing the composition, component i) mineral silicates selected from tectosilicates and phyllosilicates and component ii) igneous rocks and/or mineral silicates selected from nesosilicates and inosilicates and, optionally component iii) hydrated lime, are mixed by methods known in the art, for example, calculating the weights of each component.

The method may comprise analysing a fraction of the components i) and/or ii) before being mixed or analysing a fraction of the mixture obtained to check its chemical constitution of oxides and hydroxides a)-e) and optionally f), and adjusting the quantities of components i) and/or ii) and optionally iii), if needed, to obtain the desired percentages of oxides and hydroxides a)-e) and optionally f), within the defined ranges.

Mineral components i), ii) and iii) can be acquired commercially, in which case the composition of oxides and hydroxides therein is indicated by the manufacturer and, therefore, from this information, the person skilled in the art will be able to produce, adjust and determine the chemical composition of the mixture to reach a desired proportion of oxides and hydroxides within the described ranges.

Mineral components i) and/or ii), as well as the final composition, can furthermore be analysed to determine their chemical constitution by methods known to a person skilled in the art. For example, they can be analysed by means of spectrometry and/or atomic absorption techniques.

If, for example, the mixture obtained did not contain a percentage of calcium hydroxide within the required range or if said percentage was to be adjusted, the method could comprise mixing a suitable amount of hydrated lime (iii) in step a). If the method involves mixing hydrated lime (iii), this can be mixed with components (i) and (ii) in any desired order.

The method for producing the composition comprises b) micronising the mineral silicates and/or the igneous rocks and, optionally, hydrated lime (iii), before and/or after step (a), to obtain a composition with a mean particle size of 50 nm to 2000 µm.

Micronisation can be carried out as detailed above. In particular, micronisation can be carried out in one or more steps to obtain a mean particle size of 50 nm to 2000 µm of the micronised material, for example, 50 nm to 1000 µm, particularly 75 nm to 500 µm, more particularly 100 nm to 300 µm, more particularly 1 µm to 100 µm, and even more particularly 5 µm to 50 µm, and even more particularly 10 µm to 30 µm. In this step, the microniser can be set to the desired particle size.

Starting components (i), (ii) and optionally (iii) can typically have any particle size, provided that after micronisation the final composition has a mean particle size of 50 nm to 2000 µm.

Depending on the initial particle size, one or more of components (i), (ii) and/or (iii) will have to be micronised. In particular embodiments, both component (i) and component (ii) will be micronised. Optionally, if component (iii) is used to produce the composition, it can also be micronised.

In another aspect, the present specification relates to a method for producing the construction product, item or element that comprises applying the composition of the invention to a substrate, wherein:
- the composition is applied by mixing the composition with the substrate, or
- the composition is applied on the substrate, or
- the composition is applied by mixing the composition with a first substrate, to obtain a product that is a coating, and the product obtained is applied on a second substrate.

Said method for producing the construction product, item or element may further comprise the steps of producing the composition as described above.

Typically, the composition can be applied to said substrate such that the composition is in a percentage of 0.1% to 25% by weight with respect to the construction product, item or element. In particular embodiments, the composition can be applied so that the construction product, item or element may comprise 0.2 to 20%, particularly 0.5 to 15% and more particularly 1 to 10% by weight of the composition with respect to the weight of said construction product, item or element.

In a particular embodiment, the composition can be applied, for example, in powder form or suspended in a solvent (e.g., water and/or alcohol, optionally including a coadjuvant and/or a thickener) and the composition in powder form or suspended can be mixed directly with the substrate, or can be applied by means of using, for example, sprays on the substrate, being homogeneously distributed on top of the substrate, to obtain, for example, a coating of the composition on top of the substrate. The composition can also be applied mixed with adhesives.

In another particular embodiment, the composition of the invention can be applied on a product that is a coating, such as a paint, a varnish, a dye or a resin. The composition can be applied either in the process of manufacturing said coatings or as a separate component that can be added/mixed into the coating itself just before application. Thus the constituents of the substrate with which the composition is mixed to produce a coating are the constituents of the coating itself. For example, the composition can be mixed with polymers, surfactants, colourants, and other typical constituents to produce a desired coating.

The composition can also be applied on a polymeric material, for example, mixing the composition with a polymer, processing a polymer together with the composition or performing polymerisation to produce a polymer in the presence of the composition, and thus obtaining a polymer with the composition integrated into it. In a particular embodiment, the composition can be applied to the polymeric material at the time of mixing the polymer with additives for its formulation, e.g., for a specific use.

Alternatively, the composition can be applied to a polymeric material itself as a coating or as part of a coating comprising the composition, such as a paint, a varnish, a dye or a resin.

In the application of the composition on a polymeric material, the substrate corresponds to the polymeric component of the material, such as, for example, the substrate can be selected from PS (polystyrene), PP (polypropylene), PVC (polyvinylchloride), LDPE (low density polyethylene), HDPE (high density polyethylene), PET (polyethylene terephthalate), PLA (polylactic acid), polyester, PC (polycarbonate) and rubber.

The composition can also be applied to a textile material, a cellulosic material, a construction material, applying the composition as such or applying it as part of another product, such as a coating or a polymeric material comprising the composition. The application for this type of products can be carried out in a manner similar to what is described above for the polymeric material.

For example, a coating comprising the composition can be applied by spray, with a brush, or with rollers to a textile or cellulosic material or even a polymeric material.

A polymeric material comprising the composition can be applied by laminating, for example, a textile material or a cellulosic material or even laminating another polymeric material.

The composition can also be applied to a construction material by adding it among the mineral components that are typically present in these materials in the preparation thereof or even by replacing part of the mineral components of typical formulations of these construction materials with mainly mineral components, for example, the composition can be applied to mortars, plasters, cements, asphalts, concretes, bricks and tiles.

In another particular embodiment, the composition can be applied to a construction item or element, wherein the composition is applied to said construction item or element directly or as part of a product comprising the composition, such as, for example, a polymeric material, a textile material, a cellulosic material, a construction material, or a coating.

When the construction element is, for example, a road, the application of the composition can be done by a slurry, i.e., the composition is mixed with the mineral that constitutes the slurry to be applied to the road, and the slurry comprising the composition can be applied directly to the surface of the road. Alternatively, the composition can be applied in the manufacture of asphalt and the composition placed in the last layer of the asphalt, for example, before using the steamroller. When the construction element is, for example, a wall, such as a facade, the composition can be applied as part of a mortar that is applied to the surface of the wall or facade.

Moreover, textile items, such as masks, clothing, footwear and upholstery, can be made up of a textile material comprising the composition or the composition can be applied to the textile item, for example, applying a coating comprising the composition to the textile item, laminating the textile item with a product comprising the composition or placing the item in contact with a suspension of the composition in a solvent. In a particular embodiment, the composition can be applied by foulard, a process in which the composition is added to the textile by immersion of the textile in a suspension of the composition and subsequent wringing through pressure cylinders. The composition can furthermore be fixed with textile resins such as, for example, elastomers; the composition can be mixed with the textile resin and applied to the textile material or directly to the item by foulard, stamping, priming. In addition to eliminating gases such as CO₂ and volatile compounds, textile materials and items provided with the composition of the invention have antimicrobial properties.

In other embodiments, the composition can be applied to wear items, such as a tyre. For example, the composition of the invention can be applied to tyres, for example, mixing the composition with typical constituents of a tyre that are mainly made of rubber. Therefore, in the preparation of tyres comprising the composition, the composition can be applied to the rubber and to the substrate. Tyres have virtually no porosity, but as they become worn, the composition is exposed and acts with the CO₂ gases and volatile components. In most countries, the tyre tread depth must be greater than 1.6 mm (European Union) or 2/32 inches (United States); as the thickness of the tyre decreases, the composition of the invention carries out carbonation, elimination and oxidation, minimising environmental problems without deteriorating tyre quality and with virtually no increase in tyre costs.

In another aspect, the present specification relates to the use of the composition described in the present specification or of the construction product, item or element that comprises the same for carbon dioxide mineralisation and/or volatile compound oxidation under ambient temperature conditions (e.g., 10-40°C) and ambient pressure conditions around 1 atmosphere (1 bar or 0.1 MPa), for example, 0.8 to 1.1 atmospheres (0.8 -1.1 bar or 0.08 - 0.11 MPa).

The use of the composition of the invention or the construction product, item or element that comprises the same offers advantages over the use of other compositions in the prior art, since the composition of the invention has the ability to catalyse mineralisation (also referred to as carbonation) and eliminate carbon dioxide CO₂ and oxidise volatile compounds (such as formaldehyde, ammonia or sulphur oxide) by eliminating them under ambient temperature and pressure conditions.

For example, for CO₂ mineralisation, it can be found in the environment at a concentration of 350 to 5000 ppm, particularly 375 to 3000 ppm, and more particularly 390 to 1500 ppm, more particularly 400 to 1200 ppm and even more particularly 410 to 1000 ppm.

In another aspect of the invention, the present specification relates to a method for carbon dioxide mineralisation and/or volatile compound oxidation that comprises exposing the composition or the construction product, item or element as described in the present specification to said carbon dioxide and/or volatile compounds under ambient temperature and pressure conditions.

Carbon dioxide mineralisation is understood to mean the transformation of CO₂ into inorganic salts such as calcium carbonate (CaCOs), magnesium carbonate (MgCOs), aluminium carbonate (Al₂(CO₃)₃ and/or iron carbonate (FeCOs). This process is also known as carbonation.

Volatile compounds oxidation is understood to mean the transformation of volatile compounds by oxidation. Oxidised compounds are eliminated as detailed below.

CO₂ mineralisation and volatile compound oxidation therefore results in the elimination thereof from the environment, thus reducing the presence of these harmful gases.

In a particular embodiment of this aspect, the volatile compounds are selected from volatile inorganic compounds (particularly ammonia, sulphur dioxide) and volatile organic compounds (particularly formaldehyde).

In a particular embodiment of this aspect, the method is carried out under temperature conditions of 10 to 40°C and pressure conditions around 1 atmosphere (1 bar or 0.1 MPa), for example, 0.8 to 1.1 atmospheres (0.8 -1.1 bar or 0.08 - 0.11 MPa) of pressure.

The inventors surprisingly found that when the composition of the invention, the construction product, item or element are exposed to carbon dioxide (CO₂) and volatile compounds such as formaldehyde, ammonia or sulphur dioxide, a process of channelling, carbonation and oxidation of the gases adsorbed in the composition with the help of component i), such as, for example, clays or zeolites, begins thanks to the molecular mesh thereof, while metal oxides and calcium hydroxide help accelerate carbonation at ambient temperature, CO₂ enters the process of carbonation and decomposition into carbonates (e.g., CaCOs, MgCOs, Al₂(CO₃)₃, and FeCOs) and the volatile components are oxidised and decomposed, for example, ammonia decomposes into nitrogen and water and/or into nitrites and nitrates, sulphur oxide into calcium sulphite and calcium sulphate and formaldehyde into methyl, which in turn disappears.

The inventors surprisingly found that the composition of the invention decomposes most gases such as CO₂ and the mentioned volatile gases from the atmosphere at ambient temperature and without high temperature processes both during the day and at night, in other words, without the need for UV radiation from daytime sunlight.

Furthermore, the inventors in their research surprisingly found that the composition of the invention has antimicrobial properties. Therefore, the use of the composition of the invention for carbon dioxide mineralization and/or volatile compound oxidation under ambient temperature and pressure conditions offers other advantages associated with the antimicrobial properties thereof.

Therefore, in another aspect, the present specification relates to the use of the composition of the invention or the construction product, item or element that comprises the same to prevent, reduce or eliminate microbial presence and/or activity in a substrate, for example, in a substrate where the composition described in this specification is applied, and in construction products, items or elements that comprise said composition, such as textile surfaces, and on coated surfaces.

As mentioned above, the composition of the invention comprises, among other mineral oxides, iron(III) oxide, also known as ferrous oxide. In the present composition, ferrous oxide is provided by the mineral component, it is found mainly in nesosilicates and inosilicates and in a very small particle size, of 50 nm to 2000 µm, and, without being bound by any theory, it is believed that iron(III) oxide with the specified particle size confers antimicrobial properties to the composition of the invention. The antimicrobial effect of iron(III) oxide has been described on several occasions. For example, the bactericidal effect of iron(III) oxide against E. *coli* and S. *aureus* has been disclosed, an increase in this effect being observed as the concentration of Fe₂O₃ nanoparticles (NPs) increases (Rufus Alex, Sreeju N. and Daizy Philip, Synthesis of biogenic hematite ((α-Fe2O3) nanoparticles for antibacterial and nanofluid applications, RSC Adv. 2016, 6, 94206-94217). A bactericidal effect has also been seen against *P. aeruginosa* with a minimum inhibitory concentration of 0.06 mg/l (Rabia Irshad, Kamran Tahira, Baoshan Lia, Aftab Ahmada, Azka R. Siddiquia, Sadia Nazirb. Antibacterial activity of biochemically capped iron oxide nanoparticles: A view towards green chemistry. Journal of Photochemistry and Photobiology B: Biology 170, 2017, 241-246). Another study reports the bactericidal activity of nanostructured hematite against a variety of Gram-positive and Gram-negative bacteria; P. aeruginosa, S. aureus, K. pneumoniae, Lysinibacillus sphaericus and Bacillus safensis (Harshiny Muthukumar Nivedhini Iswarya Chandrasekaran, Samsudeen Naina Mohammed, Saravanan Pichiah, Matheswaran Manickam. Iron oxide nano-material: physicochemical traits and in vitro antibacterial propensity against multidrug resistant bacteria. Journal of Industrial and Engineering Chemistry. 45, 25, 2017, 121-130); even proposing some mechanisms of action depending on the activity observed at each stage of growth of the bacteria in question. A bactericidal effect of Fe₂O₃ NPs against S. epidermidis has even been determined (Silvia Groiss, Raja Selvaraj, Thivaharan Varadavenkatesan, Ramesh Vinayagam. Structural characterization, antibacterial and catalytic effect of iron oxide nanoparticles synthesised using the leaf extract of Cynometra ramiflora. Journal of Molecular Structure 1128, 2017, 572-578).

However, the antimicrobial activity of iron(III) oxide in combination with other mineral components as in the composition described in this specification is enhanced by the action of the other metal oxides and hydroxides and minerals (i) and (ii), especially component (i) that provide the composition with a structural element that is also beneficial for antimicrobial activity.

All definitions and terms mentioned throughout this document apply to all aspects of the present invention.

Throughout the description and the claims, the word "comprises" and its variants do not intend to exclude other technical features, additives, components or steps.

The following examples are provided by way of illustration and are not intended to limit the present invention.

### EXAMPLES

### Example 1 - Preparation of the composition:

A composition consisting of i) 40% by weight of zeolites, ii) 25% by weight of basalt, 33% by weight of peridotite and iii) 2% by weight of hydrated lime was prepared, the percentage by weight is with respect to the weight of the composition. Components i), ii) and iii) were mixed and micronised in a Moritz colloidal mill microniser, to obtain a particle size between 10-30 µm, and the composition was obtained as a whitish powder.

The chemical composition of the composition was determined from the chemical composition indicated in the starting mineral silicates and igneous rocks acquired commercially.

The composition obtained comprised:
a) 20% by weight of magnesium oxide, MgO;
b) 13% by weight of iron(III) oxide, Fe₂O₃;
c) 5% by weight of calcium hydroxide, Ca(OH)₂;
d) 12% by weight of aluminium oxide, Al₂O₃;
e) 40% by weight of silicon dioxide, SiO₂; and
f) 10% by weight of calcium oxide, CaO,
the percentage by weight is with respect to the weight of the composition.

The properties of said composition were evaluated in different contexts as shown in the following examples.

### Example 2 - Elimination of CO₂ from the composition perse

Samples of the composition obtained in example 1 were analysed for their CO₂ mineralisation capacity for 8 days (test A) and for 102 days (test B).

### Test A)

A sample of the composition of example 1 was pretreated at 100°C for 3 hours to clean the sample and leave it moisture-free.

A Petri dish with 15.4 g of sample was arranged in a desiccator that contained in its lower part a saturated solution of sodium nitrite (NaNO₂), which provides a constant relative humidity of 62 ± 3% at 20 ± 2°C.

The desiccator was sealed and 100% industrial CO₂ bottled under pressure and supplied by *Carburos Metalicos, S.A.* was passed therethrough until all the air in the desiccator was displaced. Once the inside of the desiccator had a 100% CO₂ atmosphere, the inlet and outlet valves were closed, remaining like this for at least 24 hours. After this period, the desiccator was opened and the samples were weighed. Once weighed, they were returned to the desiccator and the previous process was repeated until constant weight.

Additionally, a second sample of the composition of the same weight was placed in a Petri dish in another desiccator with the same solution to evaluate the variation in weight due solely to the relative humidity provided by the saturated NaNO₂ solution.

Before and after the test, a characterisation of the crystalline phases of the composition was carried out by X-ray Diffraction (XRD) with a Bruker D8 ADVANCE powder diffractometer and Differential Thermal Analysis and thermogravimetry (ATD/TG) under the following conditions: ramp of 25 to 1000°C at 10°C/min platinum crucible and nitrogen atmosphere.

By comparing the variation in weight of the sample in the CO₂ uptake test in a 100% CO₂ atmosphere, as well as that of the comparative sample at humidity regulated by the sodium nitrite solution without CO₂ saturation, it was noted that the sample in an 100% CO₂ atmosphere showed 7.5% more weight gain than the comparative sample.

With the results obtained by XRD of the original sample and after the CO₂ uptake test, it is observed that after carbonation the formation of calcite (CaCOs) is noted, while a reduction is seen in components such as calcium hydroxide (Ca(OH)₂) as well as magnesium oxide, iron oxide and silica oxide.

With thermogravimetric (TG) analysis, it was observed that weight losses in the original sample and in the sample after the CO₂ uptake test are different in total value and in the temperature values at which they take place. It should be noted that after the TG test, the sample subjected to the 100% CO₂ atmosphere loses 19.38% compared to 10.90% of the original sample before treatment with 100% CO₂ atmosphere. That is, according to this difference, it is estimated that 8.48% of its weight corresponds to CO₂ taken up, which is in accordance with the 7.5% weight increase determined by gravimetry during the CO₂ uptake test.

Differential thermal analysis (DTA) enabled identifying the main processes that take place for each sample and that correspond to the dissociation of Ca(OH)₂; in CaO and water (at a temperature of 375 - 450°C) in the original sample, and to the decarbonation of CaCOs into CaO and CO₂ (at a temperature of 625 - 800°C) in the sample after the CO₂ uptake test. This confirms the formation of calcium carbonate in the sample subjected to the 100% CO₂ atmosphere, and the absence of said formation in the original sample, observing, in contrast, the presence of Ca(OH)₂ upon detecting its decomposition.

### Test B)

A sample of the composition of example 1 was pretreated at 100°C for 3h to clean the sample and leave it moisture-free.

In a first step, 3.02 g of sample were placed in a Petri dish for 16 days in a desiccator that contained in its lower part a saturated solution of sodium nitrite (NaNO₂) that provides a constant relative humidity of 62 ± 3% at 20 ± 2°C.

The desiccator was sealed and 100% industrial CO₂ bottled under pressure and supplied by Carburos Metálicos, S.A. was passed therethrough until all the air in the desiccator was displaced. Once the inside of the desiccator had a 100% CO₂ atmosphere, the inlet and outlet valves were closed, remaining sealed. After a while, the samples were removed and weighed. This procedure was repeated until the end of the experiment.

Before and after the test, a characterisation of the crystalline phases of the composition was carried out by X-ray diffraction (XRD) with a Bruker D8 ADVANCE powder diffractometer and thermogravimetry (TG).

By comparing the variation in weight of the sample from the beginning of carbonation, several stages could be observed: stage 1 lasting for 8 days, wherein the slope of the curve obtained by representing the variation in weight (%) over time (days) was 0.91; and a stage 2 lasting for 18 days, wherein the slope decreased to 0.78%. Then, the weight of the sample stopped increasing and remained stable for 17 days, at which time it began to increase again, but at a slower speed, with a slope of the curve of 0.29.

By comparing these results with the results obtained for the sample previously analysed in test A, as mentioned above, in this test A only stage 1 was identified, with a slope of 1.06, without progressing to the next stage after 10 days of stabilisation, when the experiment ended. The results obtained by DRX, together with the results obtained by the thermogravimetric analysis, allowed stage 1 (Test A) to mainly be attributed to the carbonation of Ca(OH)₂ together with that of some silicates that can be readily carbonated, and stage 2 to the carbonation of other silicates. After a latency period (stage 3), a slow polymerisation of the silicates was observed, which could form a type of modified silica gel cations that seemed to give way to the amorphisation of the sample, as occurs in the carbonation of cement paste at 100% CO₂.

At the end of Test B, it could be observed how, after 102 days of carbonation, the sample was still gaining weight, having increased its weight by 36% due to CO₂ uptake, under the accelerated conditions of the test.

### Example 2' - Elimination of volatile compounds from the composition per se

Analysis and characterisation studies of the chemical composition of the sample were carried out by means of chemical analysis of flame-atomic absorption spectroscopy, optical microscopy and scanning electron microscopy, under ambient temperature (20°C) and pressure (0.1 MPa) conditions.

The samples were analysed once exposed to ammonia, sulphur dioxide and formaldehyde to identify volatile component transformation products. The samples were subsequently analysed by means of determination by uptake in multibed tubes and TD-GC-MS (thermal desorption coupled to gas chromatography and detection by mass spectrometry) analysis. It could be seen that the ammonia decomposed into nitrites and nitrates, sulphur dioxide decomposed into sulphite and calcium sulphates and formaldehyde into H₂O and CO₂.

### Example 2" - Virucidal effect of the composition perse

The viral activity of the composition of example 1 was analysed according to procedure **DESIN-1078.** Standard **NF EN 14476: 2013** + **A2: 2019.**

In summary, four viral suspensions were prepared (two control and three for the test with the composition of example 1 at three different concentrations) of each one of Poliovirus type 1, Adenovirus type 5 and murine Norovirus.

Nothing was added to a control suspension (as a negative control) and 1.4% formaldehyde by volume with respect to the volume of the suspension was added to the other control suspension (as a positive control).

A volume of a suspension in water of the composition of example 1 at a concentration of 80%, 50% and 0.1% by weight of the concentration with respect to the volume of water was added to the three test suspensions, and the resulting suspension was incubated at 28°C for 30 minutes.

The control suspensions were incubated under the same conditions.

Both the control suspensions and the test suspensions were subsequently cooled for 30 minutes in an ice bath to stop the action of the product and the viral activity of each suspension was measured.

By comparing the viral activity of the test suspensions with the viral activity of the control suspensions, it was observed that the composition exhibited virucidal activity at concentrations of 80% and 50% for all viruses tested.

### Example 3 - Activity of components i) per se

Samples of zeolites and sepiolites and other clays with a mean particle size between 50 nm and 2000 µm were analysed to determine if these mineral components alone presented the same elimination properties of CO₂ and volatile components.

It was observed that samples that only contained zeolite, sepiolite or another clay, subjected within a sealed chamber to CO₂, sulphur, ammonia and formaldehyde, did not eliminate CO₂ or volatile components. Even though it was observed that all these minerals had the power to retain them, the adsorbed gases did not undergo any transformation.

In particular, the weight of the samples was analysed with a precision scale and it was observed that the weight of the minerals had increased, but when analysed by optical microscopy and scanning electron microscopy, it was observed that neither CO₂ nor the volatile gases underwent transformation.

### Example 4 - Activity of components ii) perse

Samples of basalt, peridotite, wollastonite, olivine and gabbro, in different micronised sizes between 50 nm and 2000 µm, were analysed to determine if these mineral components, each one alone, had the same elimination properties of CO₂ and volatile components at a temperature of 20°.

It was observed that the samples that only contained basalt, peridotite, wollastonite, olivine and gabbro subjected to volatile compounds and CO₂ did not have, when alone, a carbonation or elimination effect in 10 days.

After exposing the different minerals: basalts, peridotites, wollastonite, olivine and gabbro, thermal gravimetric analysis (TG) and a scanning analysis were carried out where the exposed samples were analysed to identify transformation products of CO₂ (particularly Ca, Fe, and/or Mg carbonates) and no transformation was observed in 10 days.

It was observed that, indeed, under ambient conditions and without catalysts, they did not have a daily elimination and conversion effect as intended in the invention, neither during the day nor at night.

Subsequently, the samples exposed to CO₂ and the volatile compounds were subjected to temperatures of 500 degrees. Under these temperature conditions, the carbonation reactions of CO₂ and oxidation are typically accelerated. Indeed, for samples subjected to said heat treatment, an acceleration of carbonation was observed. This confirms that each of these minerals, alone, at an environmental level have little reaction capacity to eliminate CO₂ and volatile components, and in any case a much lower capability than that of the composition of the invention.

### Example 5 - Elimination of CO₂ from products comprising the composition

The composition obtained in example 1 was applied to various types of materials to see the absorption of CO₂ emitted by dry ice (also known as solid carbon dioxide).

In particular, they prepared: Two polymeric materials (polyester plastic and rubber); A cellulosic material (Kraft paper); A construction material (mortar); A textile material (cotton, polyester); A coating (paint).

The composition was applied to each of these products in an amount of 5% by weight of the composition with respect to the weight of the product.

The composition was applied directly by mixing it with the construction material and the coating, thus providing samples of the mortar and paint, respectively.

In the case of the coating, in the process of manufacturing the paint, the composition was mixed directly with thickening agents with a conventional mixer to avoid precipitation of the mineral components to the bottom. The coating was subsequently applied to the surface of a plastic and left to dry.

Samples in the form of approximate squares were cut from all the products produced, measuring between 5x5 cm². In the case of the mortar, it was deposited in plastic buckets to be able to cut a 5x5 cm² sample. All surfaces of these samples were cleaned and left free of dust.

Samples of the same size were cut from the same products to which the composition was not added.

All the samples (with and without the composition) were weighed two days before the experiment at time 0 (t=0) and the weights were recorded in the data collection notebook. All the samples were placed in their respective boxes. Product samples containing the composition of the invention and the other identical samples without the composition of the invention were placed in each box.

The boxes were made of glass (a 4 L capacity fish tank) where dry ice was subsequently introduced (35 grams of dry ice in each box) and the boxes were sealed. The samples inside the boxes were left away from sunlight for 92 h (t=92).

The samples (with and without the composition) were removed from the boxes and weighed again after said time.

For product samples with the added composition, CO₂ absorption/desorption could be observed with the different materials used, with an increase in sample weight of between 0.9 gr and 1.65 gr. The sample that eliminated the most CO₂ was Kraft paper, followed by mortar, rubber and the textile, and then the paint and the plastic.

For the samples in which the composition of the invention had not been added, virtually no weight increase was observed.

### Example 6 - Elimination of volatile components by a paint comprising the composition

A study was carried out with different types of paints to observe the ability to eliminate volatile components of the composition.

A paint was prepared with 5% by weight of the prepared composition with respect to the total weight of the paint, adding the composition to the paint and mixing it just before using the paint.

Two rooms of equivalent dimensions and constitution were painted. One room was painted with paint with the composition of the invention and another with the same paint, but without the composition of the invention.

Containers with the same volume and the same mixture of water and ammonia were placed in each of the rooms, and the rooms were left closed for two days. When opened after two days, it was observed that in the room containing the composition of the invention the smell had been eliminated, i.e., volatile ammonia gases had been eliminated, whereas in the other room, painted with the paint that did not contain the composition, the smell of ammonia remained.

### Example 7 - Antimicrobial effect of a product comprising the composition

In this example, the bactericidal activity of a textile material from example 5 was evaluated in accordance with the AATCC 100 test method for the evaluation of antibacterial properties after a contact period of 24 h with *Staphylococcus aureus* and *Klebsiella pneumoniae.*

Bacterial analysis was performed with the AATCC 100 method.

It was observed that the textile material comprising the composition of example 1 had a 99.9% reduction of both bacteria: *Staphylococus aureus* and *Klebsiella pneumoniae.*

## Claims

1. A composition that comprises:
i) 10 to 90% by weight of mineral silicates, selected from tectosilicates and phyllosilicates;
ii) 10 to 90% by weight of igneous rocks and/or mineral silicates selected from nesosilicates and inosilicates, and iii) 0 to 20% by weight of hydrated lime
and wherein the composition comprises
a) 5 to 85% by weight of magnesium oxide, MgO;
b) 4 to 25% by weight of iron(III) oxide, Fe₂O₃;
c) 1 to 20% by weight of calcium hydroxide, Ca(OH)₂;
d) 2 to 18% by weight of aluminium oxide, Al₂O₃;
e) 8 to 65% by weight of silicon dioxide, SiO₂; and
f) 0 to 20% by weight of calcium oxide;
wherein the percentage by weight is with respect to the weight of the composition; and
wherein the composition has a mean particle size of 50 nm to 2000 µm.

2. The composition of claim 1, wherein the igneous rocks are selected from:
basalts, peridotites and gabbros; the nesosilicates are selected from forsterite and fayalite; and/or the isosilicates are selected from wollastonites.

3. The composition of claim 1 or 2, wherein the tectosilicates are selected from zeolites, feldspars, and feldspathoids; and/or the phyllosilicates are selected from clays, serpentines, and micas.

4. The composition of any one of claims 1-3, wherein the feldspars are selected from plagioclases, and/or the clays are selected from sepiolites and chlorites, and/or the micas are selected from muscovites, biotites and phlogopites.

5. The composition of any one of claims 1-4, wherein the composition comprises a) 10 to 65% by weight of MgO; b) 6% to 18% by weight of Fe₂O₃, c) 2 to 18% by weight of Ca(OH)₂, d) 4 to 16% by weight of Al₂O₃, and e) 10 to 55% by weight of SiO₂.

6. A product comprising the composition of any one of claims 1-5, wherein the product is selected from a polymeric material, a textile material, a cellulosic material, a construction material, and a coating.

7. The product according to claim 6, wherein the product is a polymeric material that is selected from PS (polystyrene), PP (polypropylene), PVC (polyvinylchloride), LDPE (low density polyethylene), HDPE (high density polyethylene), PET (polyethylene terephthalate), PLA (polylactic acid), polyester, PC (polycarbonate) and rubber.

8. The product according to claim 6, wherein the product is a coating that is selected from a paint, a varnish, a dye or a resin.

9. A construction item or element comprising the composition of any one of claims 1-5, or the product of any one of claims 6-8, wherein
- the item is particularly selected from a textile item, a filter, a wear item and a container, or
- the construction element is selected from a wall, a pavement, a road, a floor, a roof, and a facade.

10. The construction item or element of claim 9, wherein the textile item is selected from masks, clothing, footwear, and upholstery; the filter is selected from air filters, purification filters and catalytic filters; the wear item is a tyre and/or the container is selected from boxes, packaging, bottles and glasses.

11. The construction item or element of claim 10, wherein the clothing is selected from bedding, linens, fashion apparel, sportswear and work clothes; and/or the upholstery is selected from vehicle seat upholstery.

12. The product of any one of claims 6-8 or the construction item or element of any one of claims 9-11, wherein the construction product, item, or element comprises 0.1 to 25% by weight of the composition with respect to the weight of said construction product, item or element, particularly 0.2 to 20%, more particularly 0.5 to 15%, and even more particularly 1 to 10%.

13. A method for producing the composition of any one of claims 1-5, which comprises the steps of:
a) mixing 10 to 90% by weight of i) mineral silicates selected from tectosilicates and phyllosilicates with 10 to 90% by weight of ii) igneous rocks and/or mineral silicates, selected from nesosilicates and inosilicates, and 0 to 20% by weight of hydrated lime, the percentage by weight being with respect to the weight of the composition; and
b) micronising the mineral silicates and/or the igneous rocks and, optionally, the hydrated lime, before and/or after step (a), to obtain a composition with a mean particle size of 50 nm to 2000 µm.

14. A method for producing the construction product, item or element of any one of claims 6-12, which comprises applying the composition as defined in any of claims 1-5 to a substrate, wherein
- the composition is applied by mixing the composition with the substrate, or
- the composition is applied on the substrate, or
- the composition is applied by mixing the composition with a first substrate, to obtain a product that is a coating, and the product obtained is applied on a second substrate.

15. Use of the composition of any one of claims 1-5 or of the construction product, item or element of any one of claims 6-12 for carbon dioxide mineralisation and/or volatile compound oxidation under ambient temperature and pressure conditions.

16. A method for carbon dioxide mineralisation and/or volatile compound oxidation which comprises exposing the composition of any one of claims 1-5 or the construction product, item or element of any one of claims 6-12 to said carbon dioxide and/or volatile compounds under ambient temperature and pressure conditions.

17. The use of claim 15 or the method of claim 16, wherein the volatile compounds are selected from volatile inorganic compounds (particularly ammonia, sulphur dioxide) and volatile organic compounds (particularly formaldehyde).

18. Use of a composition of any one of claims 1-4 or the construction product, item or element of any one of claims 5-9 to prevent, reduce or eliminate microbial presence and/or activity in a substrate.
